# EUROPEAN PATENT APPLICATION

(11) **EP 4 785 774 A1**
(43) Date of publication of application: **05.08.2026**
(21) Application number: 26152230.4
(22) Date of filing: 16.01.2026
(51) Int. Cl.: A01D 34/00, G05D 1/622, G05D 1/246, G05D 1/633

(54) **MACHINE DETECTION ZONES AND CONTROL SYSTEM**

(30) Priority: 31.01.2025 US 202563752099 P; 23.12.2025 US 202519431300
(71) Applicant: Deere & Company, Moline, IL 61265 (US)
(72) Inventor: WAITT, Taylor A., Benson (US); CARNAHAN, Bryce A., Chapel Hill (US)
(74) Representative: Reddie & Grose LLP

(57) **Abstract**

A grass mowing vehicle may include a perception system, traction system, alert system, and control system. The control system may generate first and second detection zones, which may be variable in size; the first detection zone may be positioned between the mowing machine and the second detection zone, separated by an inner boundary. The control system may determine the location of at least one object relative to the vehicle and generate an alert for at least a predetermined length of time via the alert system when an object is located in the second detection zone. The control system may also determine the size of the second detection zone, which may be based on the time needed for an object to transition from an outer boundary of the second detection zone to the inner boundary, given the vehicle's current velocity, which may be equal to the predetermined length of time.

## Description

### CROSS REFERENCE TO RELATED APPLICATIONS

This application claims priority to United States Provisional Patent Application Serial No. 63/752,099 filed on January 31, 2025 and entitled Machine Detection Zones and Control System, the entire contents of which are hereby incorporated by reference.

### TECHNICAL FIELD

The present disclosure relates generally to systems, methods, and devices for machine detection zones and a control system associated with said machine.

### BACKGROUND

Grass mowing machines, or mowers, may be manual and/or autonomous and are used to cut grass, also called turf. Some mowers may mow an area to be mowed according to a coverage plan or path plan. Moreover, mowers may encounter objects. Such objects may be stationary or dynamic. The machine may stop for such objects, which reduces productivity and efficiency.

### SUMMARY

In one aspect of the invention, a grass mowing vehicle may include a perception system configured to sense at least one object; a traction system; an alert system; and a control system. The control system may be configured to generate at least a first detection zone and a second detection zone, at least one of said first and second detection zones variable in size, said first detection zone between said grass mowing machine and said second detection zone, and said first detection zone and said second detection zone separated by an inner boundary. The control system may determine the location of the at least one object relative to said grass mowing vehicle, generate an alert via said alert system when the at least one object is located in the second detection zone, the alert having a duration of at least a predetermined length of time, and determine the size of said second detection zone, wherein the size of said second detection zone may be based on the amount of time needed for an object to transition relative to said grass mowing vehicle from an outer boundary of said second detection zone to said inner boundary given a current velocity of said grass mowing vehicle. The amount of time needed for an object to enter the first detection zone from the second detection zone given a current speed of the grass mowing vehicle may be equal to said predetermined length of time.

In one or more implementations, the current vehicle of the grass mowing vehicle may change. The control system may command the traction system to decrease the current velocity of said grass mowing vehicle such that the time needed for an object to transition relative to said grass moving vehicle from the outer boundary of said second detection zone to the inner boundary is not less than the predetermined length of time. The control system may use a path plan to generate a predicted path of travel and may further determine and generate first and second detection zones that follow the predicted path of travel. In one or more implementations, the control system does not generate an alert for objects outside of the first and second detection zones that follow the predicted path of travel. The predicted path of travel may be a non-straight path. The control system may include a vehicle control unit and a sensor processing unit, with the sensor processing unit configured to receive and process data from the perception system. The perception system may include one or more sensors, which may be selected from the group including cameras, infrared cameras or sensors, stereo or mono cameras, other image capture devices, ultrasonic sensors, RADAR sensors, LiDAR sensors, and combinations thereof. The one or more objects may be selected from the group including static objects, dynamic objects, and combinations thereof. The alert may be selected from the group including an audio alert, a visual alert, and combinations thereof.

In another aspect of the invention, a grass mowing vehicle is provided which may include a perception system configured to sense one or more objects; a sensor processing unit configured to receive information from the perception system and send information to a vehicle control unit; a traction system configured to move the grass mowing vehicle; an alert system; and a vehicle control unit including at least one processor and at least one memory and configured to generate at least one alert of a predetermined length by determining the location of one or more objects relative to the grass mowing vehicle using information received from the sensor processing unit, generating at least first and second detection zones separated by an inner boundary wherein the second detection zone is variable in size and shape, and determining the size of the second detection zone wherein the size is based on the amount of time needed for a sensed object to transition from an outer boundary of the second detection zone to the inner boundary given a current velocity of the grass mowing vehicle. The predetermined length may be the amount of time needed for an object to transition relative to the grass mowing vehicle from an outer boundary of the second detection zone to the inner boundary given the current velocity of the grass mowing vehicle.

The vehicle control unit may determine the shape of the second detection zone, wherein the shape is based on a predicted path of travel and the predicted path of travel is based on a path plan. The alert system may be instructed to generate at least one alert of the predetermined length when at least one object is sensed in the second detection zone. The current velocity of the grass mowing vehicle may change, and the vehicle control unit may command the traction system to decrease the current velocity so that the time needed for an object to transition from the outer boundary of the second detection zone to the inner boundary is not less than the predetermined length of time. The at least one object may be selected from the group including a static object and a dynamic object.

In yet another aspect of the invention, a grass mowing vehicle may be provided which includes a perception system configured to sense one or more dynamic objects; a traction system; an alert system; and a control system configured to generate at least a first detection zone and a second detection zone, at least one of the first and second detection zones variable in size, the first detection zone between the grass mowing machine and the second detection zone, and the first detection zone and the second detection zone separated by an inner boundary. The control system may determine the location of one or more objects relative to the grass mowing vehicle, generate an alert via the alert system when one or more objects are located in the second detection zone, the alert having a duration of a predetermined length of time, and determine the size of the second detection zone, wherein the size of the second detection zone may be based on the amount of time needed for an object to transition relative to the grass mowing vehicle from an outer boundary of the second detection zone to the inner boundary given a current velocity of the grass mowing vehicle and a velocity of the object. The amount of time needed for an object to transition relative to the grass mowing vehicle from an outer boundary of the second detection zone to the inner boundary may be based on the current velocity of the grass mowing vehicle and the velocity of the object.

In one or more implementations, the velocity of the object may be an assumed velocity, and the current velocity of the grass mowing machine may change. The control system may command the traction system to decrease the current velocity of the grass mowing vehicle so that the time needed for an object to transition from the outer boundary of the second detection zone to the inner boundary is not less than the predetermined length of time.

### BRIEF DESCRIPTION OF THE DRAWINGS

The detailed description of the drawings refers to the accompanying figures.
FIG. 1 is a perspective view of an example of an implementation of the present invention, which is a fairway mower.
FIG. 1A is a perspective view of a second example of an implementation of the present invention, which is also a fairway mower.
FIG 2 is a schematic of a portion of the mower of FIG. 1.
FIG. 2A is a schematic of a portion of the mower of FIG. 1A.
FIG. 3 is a flow chart describing an example of an implementation of a method of the present invention.
FIG. 4. is a schematic of a plurality of zones surrounding a mower of the present invention.
FIG. 5 is a flow chart describing a second example of an implementation of a method of the present invention.

Like reference numerals are used to indicate like elements throughout the several figures.

### DETAILED DESCRIPTION

The following is a detailed description of one or more implementations of technology, including systems, methods, and devices for machine object detection zones and a control system for said machine.

As used herein, "e.g." is utilized to non-exhaustively list examples and carries the same meaning as alternative illustrative phrases such as "including," "including, but not limited to," and "including without limitation." Unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

Those having ordinary skill in the art will recognize that terms such as "above," "below," "upward," "downward," "top," "bottom," etc., are used descriptively for the figures, and do not represent limitations on the scope of the disclosure, as defined by the appended claims. Moreover, sometimes terms such as "above," "below," "upward," "downward," "top," "bottom," etc., may also be used in connection with describing a mower of the present invention as it is oriented when it sits on the ground in its customary operating mode. However, these terms are again used for description purposes and do not represent limitations on the scope of the disclosure, unless required by the claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

Disclosed are devices and methods related to grass mowing. In some examples of implementations described herein, the invention may be described with respect to autonomous mowing, such as autonomous mowing for golf courses. It will be understood by one of skill in the art that the devices and methods herein are also applicable to other types of mowing, such as residential and/or commercial mowing. Moreover, devices and methods herein may also be applicable to semi-autonomous or non-autonomous mowing. The devices, systems, and methods disclosed herein provide methods related to the activity of mowers of the present invention upon encountering an object. "Object" should be construed broadly to include, but not be limited to, static or non-moving features and dynamic or moving features. Devices, systems, and methods of the present invention may sense such objects, determine an object location relative to the machine, determine whether to command the machine to take action, and, if yes, command such action.

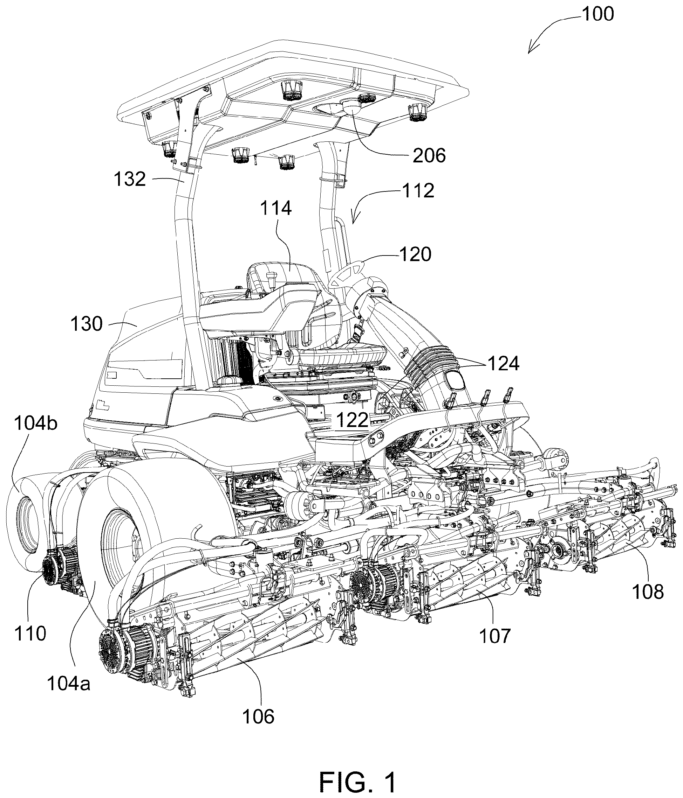

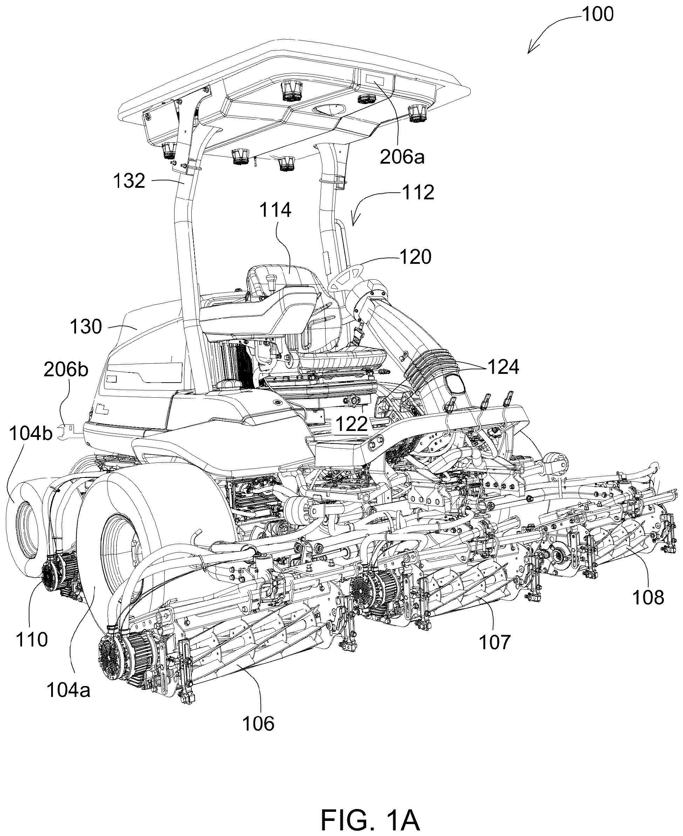

Referring to FIG. 1, an implementation of a grass mowing machine or mower **100** of the present invention is provided. The illustrated mower is a fairway mower, which may be used to mow golf course fairways. The mower **100** may include a frame supported by one or more ground engaging members **104.** The illustrated implementation includes three ground engaging members, two of which are shown in FIG. 1 **104a, 104b.** Two ground engaging members are front wheels, for example **104a,** while the third ground engaging member **104b** is illustrated as a rear wheel. Extending from the frame may be a plurality of cutting units **106, 107, 108, 109.** Cutting units may include, but are not limited to, mowing reels and/or mowing decks. The illustrated mower includes five reel cutting units arranged in two rows. A first row, located near the front of mower **100** includes three cutting units **106, 107, 108.** A second row, located behind the first row includes two cutting units, including cutting unit **110** shown in the view of FIG. 1. Any number of cutting units may be used without departing from the scope of the invention, including but not limited to one, two, three, four, five, six, seven, eight, nine, ten, eleven, twelve, thirteen, fourteen, or fifteen cutting units. Mower may include a perception system. Perception system may include one or more sensors **206,** which will be discussed in further detail below. In one or more implementations, the sensors may create a 360-degree perception bubble around mower **100.** One sensor is shown in FIG. 1: **206.** In one or more implementations another sensor may be located on the rear of the machine. Referring to FIG. 1A, a second example of an implementation of a mower of the present invention is provided. The implementation shown in FIG. 1A includes a plurality of sensors, namely **206a** and **206b.** Any number of sensors may be used without departing from the scope of the invention.

A mower of the present invention may include autonomous mowing modes and/or features. Moreover, a mower of the present invention may be configured to operate both autonomously and/or with an operator. In implementations having operator-led mowing functionality such as the illustrated implementation of FIGS. 1 and 1A, the mower **100** may further include an operator station **112.** In the illustrated embodiment, the operator station **112** includes a seat **114,** a steering wheel **120,** a foot platform **122,** and one or more foot pedals **124.** In some implementations, operator station **112** may further include one or more operator inputs and/or comfort features. In other, non-illustrated embodiments, the operator station may exclude a seat and be designed for an operator to stand on the operator station and/or walk behind the operator station. In some implementations, one or more control levers may be used to steer the machine, such as in a zero-turn radius ("ZTR") machine. In other implementations, an operator station may be omitted from the mower entirely. The mower **100** may include a hood **130** to cover a plurality of parts. The mower **100** may further include a rollover protection system ("ROPS") **132.** The mower may include at least one power source (not shown), such as under the hood. The power source may be any type suitable for powering the mower. Examples may include, but are not limited to, an internal combustion engine, one or more batteries, a hybrid system, and a combination thereof.

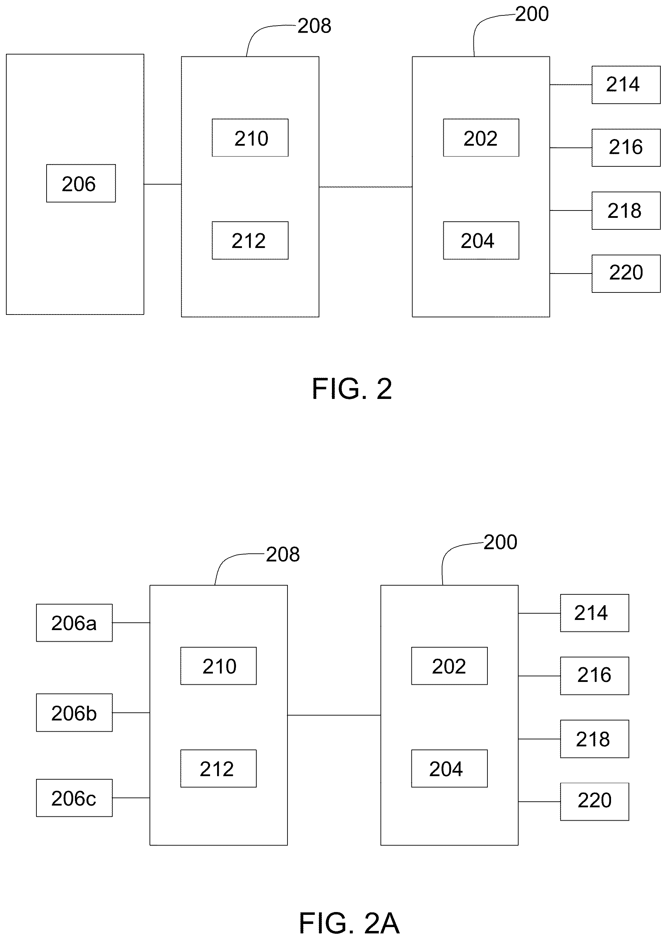

Mower **100** may further include a control system **250.** Referring to FIG. 2, an implementation of at least a portion of a first implementation of an exemplary control system **250** of a mower **100** of the present invention is shown. Control system **250** may include a vehicle control unit (sometimes "VCU") **200.** The VCU **200** may be configured to electronically control the operation of one or more components of mower **100.** VCU **200** may be any suitable processor-based device known in the art, such as a computing device or any suitable combination of computing devices. The VCU **200** may include at least one memory **202** and at least one processor **204.** The memory **202** and the processor **204** may be communicatively coupled. The memory **202** may communicate with the processor **204** and may be used to store programs and other software and information (such as in the form of data or instructions). The processor **204** may be operable to execute programs and software and receive information and send information to the memory **202.** Although a single memory **202** and a single processor **204** are illustrated, in some implementations, a plurality of memories, processors, or both may be used. Although the processor **204** and memory **202** are shown as being local components of the VCU **200,** one or both of the processor **204** and memory **202** may be located remotely. VCU **200** may be configured to perform a variety of computer-implemented functions, including those described herein. One or more implementations may include architecture excluding a vehicle control unit **200** without departing from the scope of the invention.

VCU **200** may be in communication with sensor processing unit **208,** described below, and traction system **214.** Traction system **214** may be any system configured for moving the vehicle and may include ground engaging members and one or more assemblies configured to provide power to move said ground engaging members. Traction system **214** may be at least partially controllable by VCU **200.** Traction system **214** may be any type known in the art, including but not limited to an electronic traction system and/or hydraulic traction system.

Control system may also include a localization system **216,** which may be in communication with VCU **200.** Localization system **216** may sense or detect the geographic position or location of mower **100.** Localization system **216** may be or include a global navigation satellite system (GNSS) receiver that receives signals from a GNSS satellite transmitter, a real-time kinematic (RTK) component that is configured to enhance the precision of position data derived from the GNSS signal, one or more RADAR sensors, LIDAR sensor, ultrasonic sensors, or cameras that generate sensor data for use in Simultaneous Localization and Mapping (SLAM) to identify the position or location of mower **100.** Localization system **216** may include a dead reckoning system, a cellular triangulation system, or any of a variety of other geographic position sensors. Localization may be relative to a detected object described herein.

VCU **200** may further be in communication with steering system **218.** Steering system may relate to a direction in which mower **100** travels. Accordingly, steering system may be configured to steer mower **100** in a particular direction. In one or more implementations, steering system may be configured to steer mower **100** based on a path plan. The mower may include path planning system(s), method(s), and/or device(s) (not shown). These may provide the mower and/or user with a path for mowing the turf that is specific to a particular mowing operation, such as a specific location to be mowed. A path plan may require the mower to travel in a straight path and/or in a non-straight path, such as a curved path.

Moreover, control system may include and/or be in communication with any other system of mower **100,** including, but not limited to, systems of mower **100** that are controlled by VCU **200.** Such additional systems may include, but are not limited to, an alert system **220.**

Control system may further include one or more sensors **206.** FIG. 2 shows a single sensor **206,** while FIG. 2A shows an implementation including plurality of sensors, namely **206a, 206b, 206c.** Sensors **206, 206a, 206b,** and/or **206c** may be configured to capture data related to the presence of one or more objects. In one or more examples of implementations, sensors **206, 206a, 206b,** and/or **206c** may be cameras, infrared cameras or sensors, stereo or mono cameras, other image capture devices, ultrasonic sensors, RADAR sensors, LiDAR sensors, and/or any other type of perception sensor. In one or more examples of implementations, sensors may be LiDAR sensors, one or more cameras, or a combination thereof. Other sensor types may be used without departing from the scope of the invention. Sensors **206, 206a, 206b,** and/or **206c** may be in communication with sensor processing unit **208.** Namely, sensors **206, 206a, 206b,** and/or **206c** may send data to sensor processing unit **208.**

Sensor processing unit **208** may be any suitable processor-based device known in the art, such as a computing device or any suitable combination of computing devices. Sensor processing unit **208** may include at least one sensor processing unit memory **210** and at least one sensor processing unit processor **212.** The sensor processing unit memory **210** and the sensor processing unit processor **212** may be communicatively coupled. The sensor processing unit memory **210** may communicate with the sensor processing unit processor **212** and may be used to store programs and other software and information (such as in the form of data or instructions). The sensor processing unit processor **212** may be operable to execute programs and software and receive information and send information to the sensor processing unit memory **210.** Although a single sensor processing unit memory **210** and a single sensor processing unit processor **212** are illustrated, in some implementations, a plurality of memories, processors, or both may be used. Although the sensor processing unit processor **212** and sensor processing unit memory **210** are shown as being local components of the sensor processing unit **208,** one or both of the sensor processing unit processor **212** and sensor processing unit memory **210** may be located remotely. Sensor processing unit **208** may be configured to perform a variety of computer-implemented functions, including those described herein. Sensor processing unit **208** may be in communication with VCU **200.**

Communication between components of the control system may be over a network, including but not limited to a controller area network (CAN) bus and bus controller, a local area network or wide area network communication, Wi-Fi, Bluetooth, near field or other communication system, a cellular communication system, or any other type of communication system, as well as combinations thereof.

It will be understood by one of skill in the art that the control system illustrated in FIGS. 2 and 2A are exemplary only and other architectures may be used without departing from the scope of the invention. For example, in one or more implementations, a sensor processing unit may be in communication with a traction system to command same.

Technology of the present invention may detect an object and result in commanding the mower **100** to take actions that prevent and/or reduce mower **100** stopping during a mowing operation. A mower may stop during a mowing operation to prevent a collision with an object. Technology of the present invention may prevent and/or reduce mower stopping, which increases productivity and efficiency of the mowing operation. More specifically, technology of the present invention provides for the generation of one or more detection zones, the size of which may depend on the velocity of the mower. Similarly, technology of the present invention provides for the generation of at least one alert that may be similarly dependent on one or more of mower velocity and object velocity. In addition, technology of the present invention provides for velocity control of a mower vehicle to reduce and/or eliminate the number of times a mower must stop during a mowing operation. Such velocity control may be applicable to both static and/or dynamic objects. Moreover, detection zones, alerts, and/or velocity control may take into consideration the actual and/or planned direction of travel of mower, whether such travel is straight or non-straight, such as along a curvature.

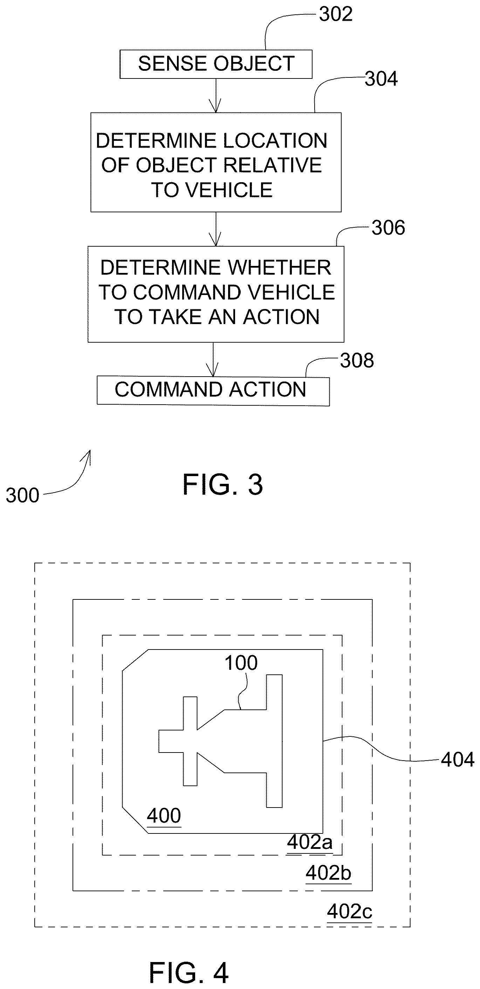

Referring to FIG. 3, an example of an implementation of a method **300** of sensing an object and commanding a machine is provided. Such a machine may be mower **100.** The exemplary method of FIG. 3 may include sensing an object, shown in box **302.** As described above, mower **100** may have one or more sensors for sensing or otherwise collecting data. Data may include information related to detected objects.

Shown in box **304,** the sensor data may be used to determine a location of a sensed object relative to the machine, such as mower **100.** In the illustrated mower, **100,** sensor data is sent to sensor processing unit **208** to interpret and analyze data. For example, sensor processing unit **208** may receive sensor data and use sensor data to determine whether one or more objects are present in the data. Sensor processing unit may also determine the distance from mower **100** to one or more objects. Sensor processing unit **208** may also use mower velocity and/or location to determine the distance from mower to one or more detected objects. In one or more implementations, data may be stored, such as in sensor processing unit memory **210.**

Another step of method **300,** may include determining whether to command the machine, such as mower **100,** to take one or more actions. Such a step is shown in box **306** of FIG. 3. The illustrated implementation shown in FIG. 2 includes a sensor processing unit **208** and a vehicle control unit **200.** In the one or more implementations, vehicle control unit **200** may determine whether to command the vehicle to perform an action. Such an action may include a change in vehicle velocity. Therefore, such an action may be to the traction system. Such an action may include activating an alert. Such an alert may be an audio alert, visual alert, combinations thereof, or any other type of alert. In one or more implementations, sensor processing unit **208** and vehicle control unit **200** are in communication, as described above. Sensor processing unit **208** may send information to vehicle control unit **200,** including but not limited to the location of one or more detected objects relative to mower **100.** In another step of method **300,** if it is determined that one or more actions should be taken, such action may be commanded, as shown in box **308** of FIG. 3. As shown in FIG. 2, vehicle control unit **200** may be in communication with traction system **214** to command actions by traction system **214.**

In one or more implementations, technology of the present invention may detect objects within one or more detection zones relative to mower **100.** For example, in one or more implementations, technology of the present invention may determine whether an object is located in a first detection zone or a second detection zone. A first detection zone **400** may be located immediately around mower **100,** as shown in FIG. 4. A second detection zone **402** may be located around a perimeter of the first detection zone **400.** As noted above, an objective of the present invention may be to reduce and/or eliminate the number of times the mower stops during a mowing operation. In one or more implementations, mower **100** may be commanded to stop if an object is located in the first zone **400.** Therefore, an objective of the mower may be to reduce and/or eliminate an object being located in the first zone **400.** If an object is detected in one or more of the first **400** and/or second detection zones **402,** an alert may be commanded. In one or more implementations, an alert is commanded if an object is in second detection zone **402.** Such an alert may -prevent the object from entering the first detection zone **400.** Alert may be any type, including an audio alert and/or visual alert. Alert may cause object to move away from mower **100,** such as outside of one or more detection zones, such as outside of all detection zones.

In one or more implementations, the size or area of one or more detection zones may depend on the velocity of mower **100.** As noted above, VCU **200** may command an alert when an object is located in second zone **402.** In one or more implementations, the duration of all alerts may be fixed, such as for a predetermined length of time. Therefore, the distance over which alert will be commanded may depend on mower velocity. When mower is traveling at a slower velocity, the distance necessary to generate a fixed alert may be smaller than the distance necessary to generate the same fixed duration alert when the mower is traveling at a greater velocity. Therefore, the size of one or more detection zones may vary based on the velocity of the mower. For example, referring to FIG. 4, area **402a** may be the size of second detection zone when mower **100** is operating a slow velocity. Area **402b** (which includes the area of **402a)** may be the size of second detection zone when mower is traveling at faster velocity than the slow velocity. Area **402c** (which includes the area of **402a** and **402b)** may be the size of second detection zone when mower is traveling at a fastest velocity compared to the slow velocity and faster velocity. Mower, such as VCU **200,** may command one or more actions of mower based on whether an object is detected in a particular zone. For example, VCU **200** may command one or more actions if an object is detected in first detection zone **400,** and VCU **200** may command one or more actions if an object is detected in the second detection zone **402.** Second detection zone actions may be different or the same as first detection zone actions. In one or more implementations, such actions are different. Such actions may result in varying machine behavior in different zones.

In one or more implementations of the present invention, an object may be dynamic. In one or more implementations, the machine, including but not limited to sensors **206a, 206b, 206c,** sensor processing unit **208,** and/or VCU **200** may be configured to determine the velocity of a dynamic object. In one or more implementations, the machine, for example VCU **200** may be configured to assume a predetermined velocity for a dynamic object. As described above, in one or more implementations of the invention, the machine, including but not limited to sensors **206a, 206b, 206c,** sensor processing unit **208,** and/or VCU **200** may be configured to command an alert for a predetermined amount of time no matter what velocity the mower is traveling. In other words, the size of one or more detection zones may vary depending on the velocity of mower **100.** Moreover, in one or more implementations, the size of one or more detection zones may vary based on the velocity of a dynamic object. As noted above, it may be an objective to prevent and/or reduce the number of times wherein an object enters first detection zone **400** during a mowing operation. Moreover, in one or more implementations, an alert may be commanded for a fixed duration. In one or more implementations, the length of the alert fixed duration may correspond to the length of time necessary for an object, such as a dynamic object, to move into first detection zone **400** from second detection zone **402.** If object is dynamic, it follows that the size of the second detection zone **402** may need to be adjusted to consider the velocity of the object so as to prevent object from entering first detection zone **400.**

In one or more implementations of the invention, mower **100** may command an alert before mower reaches a detected object. Moreover, mower **100** may change its velocity based on the speed and position of a detected object. Further, mower may be configured to maintain an alert for a fixed duration prior to reaching a detected object. In one or more implementations, the fixed duration may be a minimum duration. In one or more implementations, mower may be configured to maintain an alert for a fixed duration prior to a detected object and an outer perimeter of detection zone meeting each other. In one or more implementations, the fixed duration of an alert may correspond to the distance required for object to move from its detected location to outer perimeter of first detection zone, also known as the inner boundary **404.** Therefore, the size of detection zone may be depend, at least in part, on the fixed duration of alert. In one or more implementations, the size of second detection zone **402** may correspond to the distance required to command alert for the fixed duration given the mower and/or object speed.

In one or more implementations the velocity of detected objects may be assumed to move at a predetermined velocity by mower **100.** In one or more implementations, the size of first detection zone **400** and second detection zone **402** may depend both on the mower velocity and the velocity of the object, such as a predetermined assumed object velocity. In one or more implementations, machine, such as mower **100,** may be configured such that size of second detection zone **402** is equal to or approximately equal to a size that corresponds to the amount of time for object and mower to approach one another. In one or more implementations, the amount of time for object to move from an outer perimeter **404** of second detection zone **402** to first detection zone **400** may be equal to or approximately equal to the amount of time an alert is commanded. In one or more implementations, mower **100** may be configured to command an alert for a predetermined amount of time. The mower **100** may be configured to size second detection zone for the amount predetermined alert time given the velocity of mower **100** and the assumed (or measured) object velocity. In one or more implementations, alert may be configured to prevent mower **100** from stopping due to the object, such as if object enters first detection zone **400.**

In one or more implementations of the invention, velocity control of the mower may be provided. Such velocity control may be based on the presence of one or more objects in one or more detection zones. Upon detection of an object, mower may analyze the distance required to stop should the object move into first detection zone **400.** Such a distance may be dependent on the velocity of mower. Moreover, such a distance may be dependent on the velocity of object in the case of a dynamic object. Mower may analyze whether the distance required to stop should object enter detection zone **400** is sufficient to prevent a collision given the mower velocity at the time of detection. If the distance required to prevent a collision upon object entering detection zone **400** is insufficient to prevent a collision, mower may be commanded to adjust its velocity to a velocity wherein the distance required to prevent a collision upon object entering detection zone **400** is sufficient to prevent a collision. In one or more implementations, such a determination may be carried out by VCU **200.** Moreover, in one or more implementations, VCU **200** may command traction system **214** to carry out changes in velocity. In one or more implementations, mower velocity may be controlled such that the fixed alert duration is achieved. For example, as mower approaches an object, mower velocity may decrease until such object is reached. In one or more implementations, such velocity control may reduce and/or eliminate the mower stopping. Reducing and/or eliminating stoppage of the mower may increase efficiency and productivity.

In one or more implementations, mower **100** may follow a path plan. In such an implementation, the present invention may be configured to determine the location of an object with respect to the path that mower **100** will follow. The path that the mower will follow may be any shape, such as a non-straight shape. For example, the path that the mower will follow may be curved. Mower **100** may be configured to determine first detection zone and second detection zone with respect to the future location of the mower as it follows path plan. In one or more implementations, mower **100** may be configured to determine the steered angle of mower **100.** For example, a steering sensor may detect a steered angle of mower **100.** Mower **100** may be configured to use the detected steered angle of the vehicle to determine the direction of travel of mower **100.** Mower **100** may be configured to determine first detection zone and second detection zone with respect to the future location of the mower as it travels in the detected steered angle of travel. In one or more implementations, mower may be configured to determine a heading of the mower. The heading of the mower may be used to determine the direction of travel of mower **100.** Mower **100** may be configured to determine first detection zone and second detection zone with respect to the future location of the mower as it travels along a particular heading. In one or more implementations, mower may be configured to determine a track of mower **100.** Mower **100** may be configured to determine first detection zone and second detection zone with respect to the future location of the mower as it travels in or along a particular track.

In one or more implementations, mower **100** may be configured to analyze whether a detected object is on path or off path based on the direction of travel of mower and/or anticipated direction of travel of mower. In one or more implementations, mower may be configured to detect the distance of an object relative to a path plan and/or anticipated future location of mower. In one or more implementations, the velocity of mower may be commanded to a lower velocity as mower passes by an object, as described above. In one or more implementations, mower may continuously monitor to detect objects and adjust one or more detection zone sizes and/or shapes. In one or more implementations, the size and/or shape of one or more detection zones may change based on a path plan and/or anticipated future location of mower. For example, one or more detection zones may have a curved shape if the mower is not traveling straight. Accordingly, in one or more implementations, detection may sweep along the path of travel and/or anticipated path of travel.

In one or more implementations, the size and/or shape of one or more detection zones may vary based on the location of the zone with respect to mower. For example, the shape and/or size of one or more detection zones may be smaller to the side of mower than in the direction of travel, such as a forward direction, of mower. This may be due, at least in part, to the mower velocity being less relevant to the determination of the size of one or more detection zones to the side of mower, as the mower is not moving laterally. Rather, the size of one or more detection zones to the side of mower may rely more heavily on the velocity of object (actual or assumed).

In one or more implementations, mower **100** may generate a grid for determining one or more of the above-described analyses.

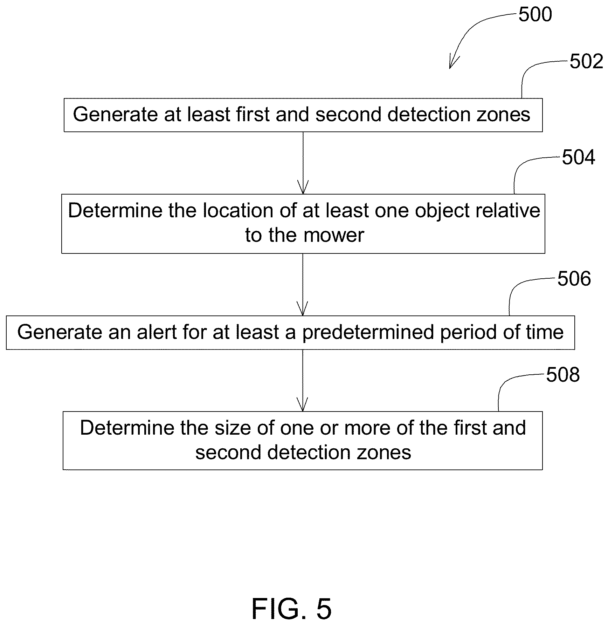

Turning to FIG. 5, an example of another method **500** of the present invention is shown. As shown by block **502,** a step of the method may include generating at least first and second detection zones. Such a step may be carried out by control system **250,** such as by VCU **200.** Another step of the method may include determining the location of at least one object relative to the mower **100,** as shown in block **504.** Such a step may be carried out by one or more of perception system, including one or more sensors, and control system **250,** such as VCU **200** and/or sensor processing unit **208.** In another step of the method, shown in block **506,** an alert may be generated. Alert generation may be carried out by one or more of control system **250,** including but not limited to VCU **200,** and alert system **220.** An alert may be generated when at least one object is located in one or more detection zones. In one example, an alert may be generated when at least one object is located in a second detection zone, as described below. Such an alert may be for a predetermined period of time. In yet another step of the method, shown in block **508,** the size of one or more of the first and second detection zones may be determined. Such a determination may be by control system **250,** such as VCU **200.** In one or more implementations, the size of the second detection zone may be determined. Moreover, in one or more implementations, the size of the second detection zone may be based on the amount of time needed for an object to transition relative to the mower from an outer boundary of the second detection zone, as described below, to an inner boundary given a current velocity of the mower.

Although various representative embodiments of this invention have been described above with a certain degree of particularity, those skilled in the art could make numerous alterations to the disclosed embodiments without departing from the spirit or scope of the inventive subject matter set forth. Joinder references (e.g. attached, adhered, joined, connected) are to be construed broadly and may include intermediate members between a connection of elements and relative movement between elements. As such, joinder references do not necessarily infer that two elements are directly connected and in fixed relation to each other. In some instances, in methodologies directly or indirectly set forth herein, various steps and operations are described in one possible order of operation, but those skilled in the art will recognize that steps and operations may be rearranged, replaced, or eliminated without necessarily departing from the spirit and scope of the present invention. It is intended that all matter contained in the above description or shown in the accompanying drawings shall be interpreted as illustrative only and not limiting. Changes in detail or structure may be made without departing from the spirit of the invention.
Embodiments of the invention can be described with reference to the following numbered clauses, with preferred features laid out in dependent clauses:
1. A grass mowing vehicle, comprising:
   a perception system configured to sense at least one object;
   a traction system;
   an alert system; and
   a control system configured to:
      generate at least a first detection zone and a second detection zone, at least one of said first and second detection zones variable in size, said first detection zone between said grass mowing machine and said second detection zone, and said first detection zone and said second detection zone separated by an inner boundary;
      determine the location of said at least one object relative to said grass mowing vehicle;
      generate an alert via said alert system when said at least one object is located in said second detection zone, said alert having a duration of at least a predetermined length of time; and
      determine the size of said second detection zone, wherein the size of said second detection zone is based the amount of time needed for an object to transition relative to said grass mowing vehicle from an outer boundary of said second detection zone to said inner boundary given a current velocity of said grass mowing vehicle; and
      wherein the amount of time needed for an object to enter the first detection zone from the second detection zone given a current speed of the grass mowing vehicle is equal to said predetermined length of time.
2. The grass mowing vehicle of clause 1 wherein said current speed of the grass mowing vehicle changes.
3. The grass mowing vehicle of clause 1 or clause 2, wherein said control system commands said traction system to decrease said current velocity of said grass mowing vehicle such that the time needed for an object to transition relative to said grass moving vehicle from said outer boundary of said second detection zone to said inner boundary is not less than said predetermined length of time.
4. The grass mowing vehicle of any one of the preceding clauses, wherein said control system uses a path plan to generate a predicted path of travel.
5. The grass mowing vehicle of clause 4, wherein said control system is further configured to determine generate first and second detection zones that follow said predicted path of travel.
6. The grass mowing vehicle of clause 5, wherein said control system does not generate an alert for objects outside of said first and second detection zones that follow said predicted path of travel.
7. The grass mowing vehicle of clause 6 wherein said predicted path of travel is a non-straight path.
8. The grass mowing vehicle of any one of the preceding clauses, wherein said control system includes a vehicle control unit and a sensor processing unit, wherein said sensor processing unit is configured to receive and process data from said perception system.
9. The grass mowing vehicle of any one of the preceding clauses, wherein said perception system includes one or more sensors.
10. The grass mowing vehicle of clause 9, wherein said sensors are selected from the group consisting of cameras, infrared cameras or sensors, stereo or mono cameras, other image capture devices, ultrasonic sensors, RADAR sensors, LiDAR sensors, and combinations thereof.
11. The grass mowing vehicle of any one of the preceding clauses, wherein said one or more objects are selected from the group consisting of static objects, dynamic objects, and combinations thereof.
12. The grass mowing vehicle of any one of the preceding clauses, wherein said alert is selected from the group consisting of an audio alert, a visual alert, and combinations thereof.
13. A grass mowing vehicle, comprising:
   a perception system configured to sense one or more objects;
   a sensor processing unit configured to receive information from said perception system and send information to a vehicle control unit;
   a traction system configured to move said grass mowing vehicle;
   an alert system; and
   said vehicle control unit including at least one processor and at least one memory and
   configured to generate at least one alert of a predetermined length by:
      determine the location of one or more objects relative to said grass mowing vehicle using information received from said sensor processing unit;
      generating at least first and second detection zones separated by an inner boundary wherein the second detection zone is variable is size and shape;
      determining the size of said second detection zone wherein said size is based on the amount of time needed for a sensed object to transition from an outer boundary of said second detection zone to said inner boundary given a current velocity of said grass mowing vehicle and wherein said predetermined length is the amount of time needed for an object to transition relative to said grass mowing vehicle from an outer boundary of said second detection zone to said inner boundary given said current velocity of said grass mowing vehicle;
      determining the shape of said second detection zone wherein said shape is based on a predicted path of travel and wherein said predicted path of travel is based on a path plan;
      instruct said alert system to generate said at least one alert of said predetermined length when at least one object is sensed in said second detection zone.
14. The grass mowing vehicle of clause 13 wherein the current velocity of said grass mowing vehicle changes.
15. The grass mowing vehicle of clause 13 or clause 14, wherein said vehicle control unit commands said traction system to decrease said current velocity of said grass mowing vehicle such that the time needed for an object to transition relative to said grass moving vehicle from said outer boundary of said second detection zone to said inner boundary is not less than said predetermined length of time.
16. The grass mowing vehicle of any one of clauses 13 to 15, wherein said at least one object is selected from the group consisting of a static object and a dynamic object.
17. A grass mowing vehicle, comprising:
   a perception system configured to sense one or more dynamic objects;
   a traction system;
   an alert system; and
   a control system configured to:
      generate at least a first detection zone and a second detection zone, at least one of said first and second detection zones variable in size, said first detection zone between said grass mowing machine and said second detection zone, and said first detection zone and said second detection zone separated by an inner boundary;
      determine the location of said one or more objects relative to said grass mowing vehicle;
      generate an alert via said alert system when said one or more objects are located in said second detection zone, the alert having a duration of a predetermined length of time; and
      determine the size of said second detection zone, wherein the size of said second detection zone is based the amount of time needed for an object to transition relative to said grass mowing vehicle from an outer boundary of said second detection zone to said inner boundary given a current velocity of said grass mowing vehicle and a velocity of said object; and
      wherein the amount of time needed for an object to transition relative to said grass mowing vehicle from an outer boundary of said second detection zone to said inner boundary given a current velocity of said grass mowing vehicle and a velocity of said object.
18. The grass mowing vehicle of clause 17, wherein said velocity of said object is an assumed velocity.
19. The grass mowing vehicle of clause 17 or clause 18, wherein said current velocity of said grass mowing machine changes.
20. The grass mowing vehicle of clause 19, wherein said control system commands said traction system to decrease said current velocity of said grass mowing vehicle such that the time needed for an object to transition relative to said grass moving vehicle from said outer boundary of said second detection zone to said inner boundary is not less than said predetermined length of time.

## Claims

1. A grass mowing vehicle, comprising:
a perception system configured to sense at least one object;
a traction system;
an alert system; and
a control system configured to:
generate at least a first detection zone and a second detection zone, at least one of said first and second detection zones variable in size, said first detection zone between said grass mowing machine and said second detection zone, and said first detection zone and said second detection zone separated by an inner boundary;
determine the location of said at least one object relative to said grass mowing vehicle;
generate an alert via said alert system when said at least one object is located in said second detection zone, said alert having a duration of at least a predetermined length of time; and
determine the size of said second detection zone, wherein the size of said second detection zone is based the amount of time needed for an object to transition relative to said grass mowing vehicle from an outer boundary of said second detection zone to said inner boundary given a current velocity of said grass mowing vehicle; and
wherein the amount of time needed for an object to enter the first detection zone from the second detection zone given a current speed of the grass mowing vehicle is equal to said predetermined length of time.

2. The grass mowing vehicle of claim 1 wherein said current speed of the grass mowing vehicle changes.

3. The grass mowing vehicle of claim 1 or claim 2, wherein said control system commands said traction system to decrease said current velocity of said grass mowing vehicle such that the time needed for an object to transition relative to said grass moving vehicle from said outer boundary of said second detection zone to said inner boundary is not less than said predetermined length of time.

4. The grass mowing vehicle of any one of the preceding claims, wherein said control system uses a path plan to generate a predicted path of travel.

5. The grass mowing vehicle of claim 4, wherein said control system is further configured to determine generate first and second detection zones that follow said predicted path of travel.

6. The grass mowing vehicle of claim 5, wherein said control system does not generate an alert for objects outside of said first and second detection zones that follow said predicted path of travel.

7. The grass mowing vehicle of claim 6 wherein said predicted path of travel is a non-straight path.

8. The grass mowing vehicle of any one of the preceding claims, wherein said control system includes a vehicle control unit and a sensor processing unit, wherein said sensor processing unit is configured to receive and process data from said perception system.

9. The grass mowing vehicle of any one of the preceding claims, wherein said perception system includes one or more sensors.

10. The grass mowing vehicle of claim 9, wherein said sensors are selected from the group consisting of cameras, infrared cameras or sensors, stereo or mono cameras, other image capture devices, ultrasonic sensors, RADAR sensors, LiDAR sensors, and combinations thereof.

11. The grass mowing vehicle of any one of the preceding claims, wherein said one or more objects are selected from the group consisting of static objects, dynamic objects, and combinations thereof.

12. The grass mowing vehicle of any one of the preceding claims, wherein said alert is selected from the group consisting of an audio alert, a visual alert, and combinations thereof.

13. A grass mowing vehicle, comprising:
a perception system configured to sense one or more objects;
a sensor processing unit configured to receive information from said perception system and send information to a vehicle control unit;
a traction system configured to move said grass mowing vehicle;
an alert system; and
said vehicle control unit including at least one processor and at least one memory and
configured to generate at least one alert of a predetermined length by:
determine the location of one or more objects relative to said grass mowing vehicle using information received from said sensor processing unit;
generating at least first and second detection zones separated by an inner boundary wherein the second detection zone is variable is size and shape;
determining the size of said second detection zone wherein said size is based on the amount of time needed for a sensed object to transition from an outer boundary of said second detection zone to said inner boundary given a current velocity of said grass mowing vehicle and wherein said predetermined length is the amount of time needed for an object to transition relative to said grass mowing vehicle from an outer boundary of said second detection zone to said inner boundary given said current velocity of said grass mowing vehicle;
determining the shape of said second detection zone wherein said shape is based on a predicted path of travel and wherein said predicted path of travel is based on a path plan;
instruct said alert system to generate said at least one alert of said predetermined length when at least one object is sensed in said second detection zone.

14. The grass mowing vehicle of claim 13 wherein the current velocity of said grass mowing vehicle changes.

15. The grass mowing vehicle of claim 13 or claim 14, wherein said vehicle control unit commands said traction system to decrease said current velocity of said grass mowing vehicle such that the time needed for an object to transition relative to said grass moving vehicle from said outer boundary of said second detection zone to said inner boundary is not less than said predetermined length of time.
